# DEMANDE DE BREVET EUROPEEN

(11) **EP 0 616 309 A1**
(43) Date de publication de la demande: **21.09.1994**
(21) Numéro de dépôt: 94400544.6
(22) Date de dépôt: 14.03.1994
(51) Int. Cl.: G09B 7/06, G09B 7/00, G09B 5/12

(54) **Système électronique d'enseignement à distance**

(30) Priorité: 15.03.1993 FR 9302967
(71) Demandeur: EDUCINVEST, F-75008 Paris (FR)
(72) Inventeur: Bourrienne, Michel, F-76160 Saint Jacques sur Darnetal (FR)
(74) Mandataire: Joly, Jean-Jacques

(57) **Abrégé**

La présente invention concerne un système électronique d'enseignement à distance dans lequel chaque terminal élève (50) est relié à un centre serveur (70) par l'intermédiaire du réseau téléphonique (30), ce centre serveur étant lui même relié par ce même réseau téléphonique à chaque terminal professeur (90), le terminal élève comportant des moyens d'émission de télécopie (52, 58, 60) pour adresser au professeur via le centre serveur un document à corriger et des moyens de réception en mode télécopie et en mode caractère (52,60) pour recevoir via le centre serveur le document corrigé du professeur, et le terminal professeur comportant des moyens de correction interactive (98) pour permettre une correction directe du document reçu de l'élève via le centre serveur au niveau de moyens de visualisation (96) de ce terminal sans nécessiter de moyen d'impression de télécopie.

Un ensemble informatique (110) est relié au centre serveur (70), peut recevoir des requêtes de ce dernier et est destiné à lui délivrer des corrigés-types des documents adressés au professeur par l'élève.

Application au télétravail.

## Description

La présente invention concerne un système électronique d'enseignement à distance destiné à permettre des échanges entre un corps professoral et ses élèves.

Classiquement, en matière d'enseignement à distance, les copies des élèves sont adressées à un professeur au moyen d'un acheminement postal qui présente d'une part le défaut d'être soumis au aléas d'un tel mode de transport et d'autre part de provoquer des délais d'attente parfois long du fait de la nécessaire gestion par le professeur des multiples copies, provenant de différents élèves, ayant souvent des niveaux distincts, pouvant lui parvenir.

Une solution envisageable pour accroître la rapidité des échanges élèves-professeurs est d'assurer les liaisons entre ces deux partenaires au moyen de télécopieurs. Les aléas de l'acheminement postal sont ainsi supprimés et en recevant plus rapidement la copie de l'élève, le professeur peut consacrer plus de temps à chaque copie qu'il reçoit. Toutefois, ici encore, le professeur doit effectuer un classement des copies reçues et veiller éventuellement, lors de contrôle des connaissances par exemple, à ce qu'elles comportent toutes les feuilles nécessaires à ce contrôle et seulement celles-ci. En outre, un tel dispositif est mal adapté à la correction de formulaires du type questionnaire à choix multiples dans lequel le professeur doit répondre directement sur la copie qu'il a reçue précédemment de l'élève, la double transmission de cette copie étant à l'origine d'une source de dégradation importante des données inscrites sur cette copie.

La présente invention a pour but de pallier ces inconvénients en proposant un système électronique d'enseignement à distance limitant au maximum le travail administratif de gestion des copies réalisé par le professeur et permettant une retransmission des informations vers les élèves sans dégradation de celles-ci.

Ces buts sont atteints par un système électronique d'enseignement à distance entre un premier ensemble de professeurs et un second ensemble d'élèves par l'intermédiaire d'un réseau téléphonique, chacun des professeurs et des élèves étant équipé d'un terminal, caractérisé en ce que chaque terminal élève est relié à un centre serveur par l'intermédiaire du réseau téléphonique, ce centre serveur étant lui même relié par ce même réseau téléphonique à chaque terminal professeur, le terminal élève comportant des moyens d'émission de télécopie pour adresser au professeur un document à corriger et des moyens de réception en mode télécopie et en mode caractère pour recevoir le document corrigé du professeur, le centre serveur comportant des moyens de traitement pour la réception et la gestion des documents à corriger envoyés par les élèves et pour la réémission des documents corrigés reçus des professeurs, et le terminal professeur comportant des moyens de correction interactive pour permettre une correction directe du document de l'élève au niveau de moyens de visualisation sans nécessiter de moyen d'impression de télécopie.

Les moyens d'émission de télécopie du terminal élève comportent des moyens d'émission/réception élève pour l'envoi sur le réseau téléphonique de données en mode image correspondant à un document saisi sur des moyens d'entrée de ce terminal, les moyens d'émission/réception étant reliés à des moyens de mémoire en mode caractère pouvant délivrer le document corrigé à l'élève au travers de moyens de télécopie d'impression reliés à ces moyens mémoire.

Les moyens de traitement du centre serveur comportent des premiers moyens d'émission/réception centrale recevant le document en mode image du terminal élève et le plaçant sélectivement dans une base de données sous le contrôle de moyens de gestion, des seconds moyens d'émission/réception centrale permettant une réémission en mode image des données ainsi triées de la base vers le terminal professeur, les moyens d'émission/réception centrale assurant la réémission vers l'élève du document corrigé reçu du terminal professeur sur les seconds moyens d'émission/réception centrale.

Le terminal professeur comporte également des moyens de stockage pour permettre d'emmagasiner, sous la commande de moyens de traitement professeur les documents à corriger reçus sur des moyens d'émission/réception.

Les moyens de gestion du centre serveur permettent un rangement sélectif, dans la base de données, des documents reçus des élèves, en fonction de discriminateurs existant préalablement au niveau de ce document. Ces discriminateurs présents dans le document permettent au moins une identification de l'élève, une identification du devoir et une identification de chaque page de ce devoir.

Avantageusement, le système selon l'invention comporte en outre un ensemble informatique relié au centre serveur et destiné à délivrer à ce dernier des corrigés-type des documents adressés au professeur par l'élève. Cette délivrance est réalisée au niveau du centre serveur par les moyens d'émission/réception centrale qui assurent également un chaînage du corrigé-type avec le document corrigé correspondant devant être réémis vers l'élève.

Dans un second mode de réalisation, le système selon l'invention ne comporte pas de terminal professeur, le centre serveur étant alors dépourvu de seconds moyens d'émission/réception centrale.

Dans encore un autre mode de réalisation, le système peut être muni d'un terminal de type télétel permettant la saisie par l'élève de questionnaires à choix multiples et relié à un serveur télétel en liaison avec l'ensemble informatique.

Grâce à ce système, les communications entre le professeur et son élève sont considérablement améliorées tant en délai qu'en qualité, le recours à différents discriminateurs autorisant un aiguillage automatique des copies, ainsi que leur contrôle, directement vers le professeur compétent.

D'autres caractéristiques et avantages de la présente invention ressortiront mieux à la description suivante, faite à titre indicatif et non limitatif, en regard des dessins annexés, sur lesquels:
- La figure 1 montre un système électronique d'enseignement à distance selon l'invention,
- Les figures 2 et 3 représentent des variantes de réalisation du système de la figure 1, et
- La figure 4 montre un dispositif électronique de téléenseignement de l'art antérieur.

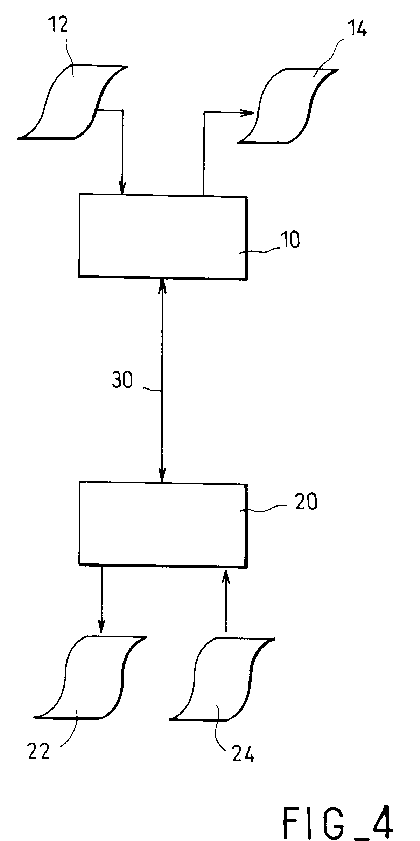

Une solution au téléenseignement ou enseignement à distance est donnée par l'architecture de la figure 4 dans laquelle deux télécopieurs, un télécopieur élève 10 et un télécopieur professeur 20 sont reliés entre eux au travers d'un réseau téléphonique public 30.

Chaque télécopieur peut fonctionner en émission et en réception. Ainsi, l'émission par l'élève d'une première feuille 12 par le télécopieur de l'élève 10 entraîne une transmission sur le réseau 30, selon un mode image (ou mode point à point), de l'information contenue sur cette feuille. A la réception sur le télécopieur du professeur 20, cette information est retranscrite sur une seconde feuille 22 que le professeur peut alors exploiter comme s'il s'agissait d'un document reçu au moyen d'un acheminement postal classique. Ce processus peut bien sûr être répété dans le sens opposé par envoi à partir du télécopieur professeur d'une feuille 24 vers le télécopieur de l'élève qui restituera son contenu sur une autre feuille 14.

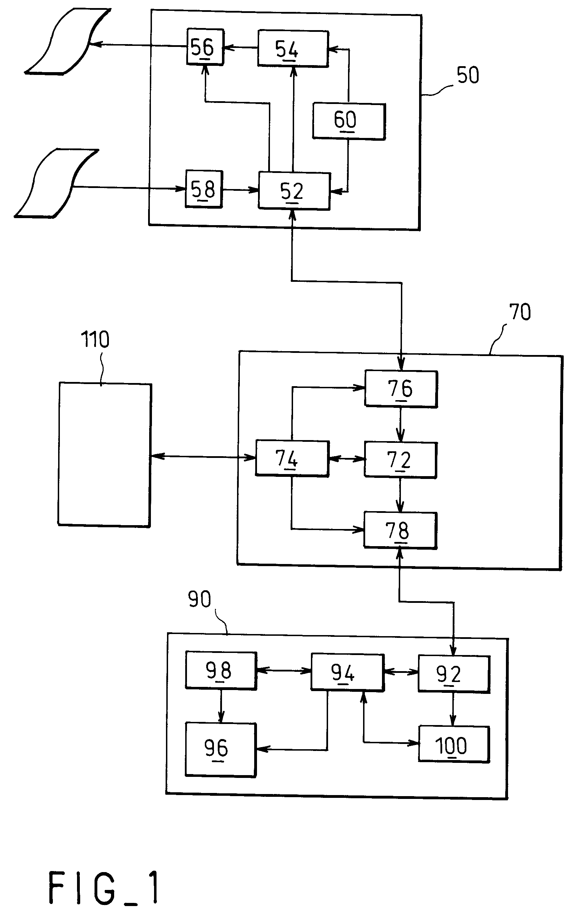

La figure 1 montre un système électronique d'enseignement à distance selon l'invention. Il comporte principalement un terminal élève 50 relié à un centre serveur 70 lui-même relié à un terminal professeur 90, les liaisons entre ces éléments étant réalisées par l'intermédiaire d'un réseau téléphonique public. Un ensemble informatique 110 peut en outre être relié au centre serveur 70 pour échanger avec ce dernier certaines informations de gestion (notamment diverses requêtes) de l'ensemble ainsi formé.

Pour la clarté de la description, seuls un terminal élève et un terminal professeur ont été représentés en liaison avec le centre serveur. Dans la pratique, bien évidemment, ce sont plusieurs centaines de terminaux qui seront reliés à un centre serveur unique dont il sera vu plus avant qu'il est constitué pour cela par un réseau de micro-ordinateurs.

Le terminal élève 50 comporte des moyens d'émission/réception des informations 52 reliés d'une part à des moyens de mémoire de caractères 54 et d'autre part à des moyens de télécopie d'impression 56 générant l'impression d'un document sur ce terminal élève, les moyens de mémoire étant aussi reliés à ces moyens d'impression. La transmission en mode image des informations analysées sur un document reçu sur des moyens d'entrée 58 de ce terminal est réalisée au travers des moyens d'émission/réception élève 52. La commande et le contrôle du terminal sont assurés par des moyens de traitement élève 60.

Le centre serveur 70 est formé d'un réseau de microordinateurs assurant la gestion des émissions et des réceptions de données en provenance tant des élèves que des professeurs. Il permet aussi un archivage de l'ensemble de ces données. Il comporte une base de données 72 alimentée, sous le contrôle de moyens de gestion 74, d'une part à partir des informations en mode image reçues du terminal élève 50 sur des premiers moyens d'émission/réception centrale 76 et d'autre part à partir des informations reçues du terminal professeur 90 sur des seconds moyens d'émission/réception centrale 78. Les moyens de gestion 74 peuvent en outre recevoir des données en mode caractère de l'ensemble informatique 110 auquel ils sont également reliés.

Le terminal professeur 90 comporte des moyens d'émission/réception professeur 92 des données en mode image reçues du centre serveur 70, reliés à des moyens de stockage 100 de ces données. Des moyens de visualisation 96 permettent un affichage de ces données directement sur le terminal professeur et des moyens de correction interactive 98 permettent de les modifier. Ces moyens de stockage 100 assurent à la fois l'emmagasinage de l'ensemble des documents reçus du centre serveur et disponibles pour affichage et correction et l'emmagasinage des documents corrigés qui seront renvoyés au centre serveur 70 par les moyens d'émission/réception professeur 92 sans nécessiter aucune impression en mode image par des moyens d'impression de télécopie par exemple. Le contrôle de l'ensemble est réalisé par des moyens de traitement professeur 94 reliés à chacun des éléments précédents.

Classiquement, l'ensemble informatique 110 comporte des moyens de traitement, des moyens de mémoire et des moyens d'entrée/sortie destinés à coopérer ensemble et avec le centre serveur 70.

Le fonctionnement du système selon l'invention sera maintenant décrit en référence au mode préférentiel de réalisation de la figure 1. L'élève qui a rédigé chez lui un devoir adresse celui-ci, par l'intermédiaire du terminal élève 50, à l'intention d'un organisme de formation auquel cet élève est affilié. L'élève n'a plus, contrairement au dispositif de l'art antérieur, à adresser sa copie directement au professeur et ainsi évite les risques liés à une telle transmission tels que l'absence momentanée du professeur lors de cette transmission ou l'occupation de la ligne par exemple. Cette communication avec l'organisme de formation à pour effet de provoquer une liaison téléphonique entre le terminal élève et le centre serveur 70 qui recoit le devoir de l'élève par l'intermédiaire des premiers moyens d'émission/réception centrale 76 et le stocke dans la base de données 72. Ce devoir fait alors l'objet d'un traitement par les moyens de gestion 74 qui ont pour but de procéder à son décodage, c'est à dire de repérer sur ce devoir un certain nombre de discriminateurs ou marqueurs déterminés permettant d'affecter ce devoir à un professeur particulier, voire à son remplaçant si celui-ci est indisponible. Outre l'attribution de ce devoir au professeur compétent, ces discriminateurs permettent également de relever des paramètres déterminés autorisant une identification de l'élève, une identification du devoir ou encore une détermination du nombre de pages de ce devoir par exemple.

Il peut être noté que l'indication du nombre de pages permet, en cas d'interruption de la communication, de ne procéder au renvoi que des seules pages non reçues, les moyens de gestion permettant un reclassement de celles-ci dans le document correspondant. En effet, il est important de remarquer qu'un tel serveur constitué d'un réseau de micro-ordinateurs recevra des communications de plusieurs centaines d'élèves et qu'en conséquence entre le temps de coupure de la communication avec un élève et son rétablissement, ce serveur pourra avoir reçu de nombreux devoirs d'autres élèves.

L'ensemble des documents reçus est triés dans la base de données 72 en fonction des paramètres définis précédemment, les documents reçus étant en outre classés par références de cours correspondants à un secteur d'activité déterminé comme par exemple, l'éducation, l'informatique, la comptabilité, etc. Pour chaque référence, un classement par sujet de devoir est aussi réalisé. Il doit être noté que d'autres classifications sont également possibles, l'essentiel étant que les documents parviennent triés au professeur de façon à lui éviter les problèmes de gestion administrative de l'art antérieur qui ne sont plus traitables quand le nombre d'élèves par professeur devient important et que les examens approchent. Ces moyens de gestion peuvent permettent en outre classiquement une remise en ordre des pages transmises en ordre dispersé ou à l'envers.

Les informations contenues dans la base de données peuvent alors être adressées à chaque professeur concerné à une fréquence d'émission fixée préalablement entre l'organisme de formation et ce professeur. Ainsi une solution intéressante consiste à adresser chaque nuit au professeur les devoirs reçus dans la journée. Il s'agit ici d'un avantage important par rapport à l'enseignement à distance traditionnel dans lequel, lorsqu'un seul devoir était destiné à un professeur donné, l'organisme de formation ne le lui retransmettait pas tout de suite mais en général attendait un ou plusieurs autres envois d'élèves. Le classement effectué, l'émission vers le professeur est réalisée à partir des seconds moyens d'émission/réception 78 du centre serveur.

A la réception, le terminal professeur 90 reçoit ces données sur ses moyens d'émission/réception professeur 92 et provoque leur mémorisation, par l'entremise des moyens de traitement 94, dans les moyens de stockage 100. Le professeur peut ensuite à discrétion afficher les devoirs dont il désir effectuer la correction, celle-ci étant réalisée directement sur les moyens de visualisation 96 grâce aux moyens de correction interactive 98. Il n'y a donc plus comme dans la solution exposée à la figure 4 l'obligation de récupérer un exemplaire papier du devoir qui, comme il a été expliqué précédemment, ne pourra être réexpédié à l'élève sans détérioration notable des informations qu'il contient. Les corrections effectuées, les devoirs annotés de façon manuscrite par le professeur au moyen des moyens de correction interactive qui peuvent consister en un crayon optique, par exemple, puis mémorisés à nouveau dans les moyens de stockage, seront retransmis vers le centre serveur par l'intermédiaire des moyens d'émission/réception professeur 92.

Au niveau du centre serveur, les copies corrigées en provenance des différents professeurs sont reçues sur les seconds moyens d'émission/réception centrale 78 puis emmagasinées dans la base de données 72. Lorsque le système selon l'invention comporte un ensemble informatique 110, les moyens de gestion 74 sont aussi destinés à recevoir de cet ensemble informatique des fichiers en mode caractère contenant des corrigés-types des différents devoirs qui seront adressés à l'élève en même temps que son devoir corrigé de façon manuscrite par le professeur. Ces émissions sont réalisées grâce aux premiers moyens d'émission/réception 76 qui assurent un chaînage de ces corrigés-types avec le devoir de l'élève correspondant. Il est ici important de noter que ces émissions des corrigés-types en mode caractère permettent d'augmenter dans un rapport de 4 à 6, par rapport au dispositif de la figure 4, la vitesse de transmission de ces données entre le centre serveur et le terminal élève. Il peut aussi être noté qu'afin d'éviter que des transmissions n'aboutissent pas, par exemple par manque de papier dans le terminal élève, il peut être prévu que cette émission soit précédée d'un avertissement à l'élève, sous la forme d'un envoi de code ou message déterminé, l'informant qu'un document va être envoyé ou qu'il est disponible au niveau du centre serveur.

Le document corrigé auquel est éventuellement associé un corrigé-type est reçu sur les moyens d'émission/réception 52 du terminal élève puis transmis aux moyens de télécopie d'impression 56 pour délivrance d'un document papier pour l'élève. Dans le cas où le document corrigé est suivi d'un fichier en mode caractère, ce dernier est stocké dans la mémoire en mode caractère 54 à partir de laquelle il pourra être extrait pour impression en temps différé, c'est à dire hors communications.

Le système selon l'invention ainsi décrit apporte une qualité de transmission bien supérieure au dispositif de l'art antérieur et autorise des délais de réponse pouvant être réduit à vingt-quatre heures. Le recours à des protocoles de communications rapides utilisant des débits de données élevés (protocole V17 avec débit à 14.4 kb) et permettant une concision des échanges peut encore permettre une réduction de ces délais. L'informatisation totale de ce système permet en outre de le sécuriser, c'est à dire d'interdire son accès à toute personne non autorisée, une solution simple étant d'attribuer à chaque terminal élève un code spécifique connu du seul organisme de formation et qui sera lu par le centre serveur au moment de la connexion téléphonique. Par ailleurs, il peut encore être remarqué que la possibilité d'envoi d'un corrigé-type améliore le travail de l'élève en lui permettant un contrôle rapide de ses connaisances.

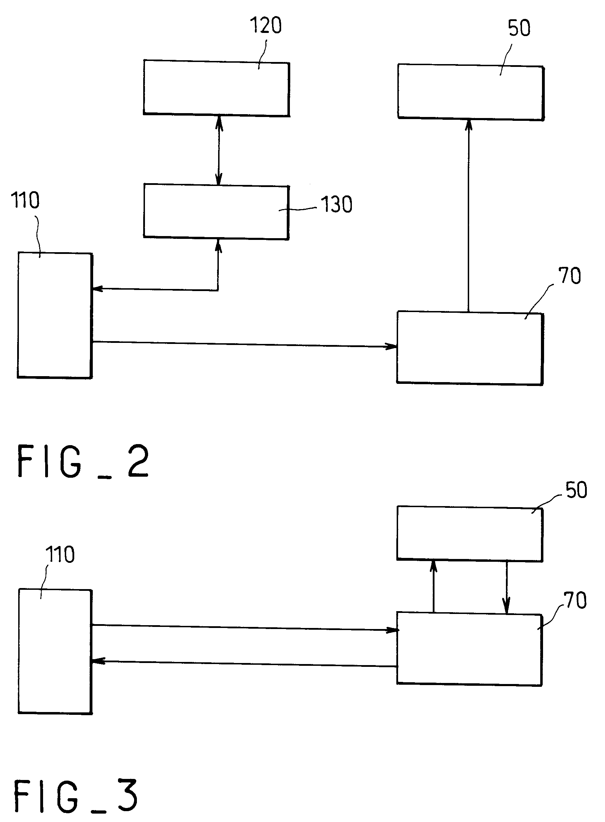

Les figures 2 et 3 représentent des variantes de la réalisation préférentielle de la figure 1 dans lesquelles la correction des devoirs est assurée de manière automatique au niveau de l'ensemble informatique 110. Ces dispositions sont particulièrement adaptées à la mise en oeuvre de questionnaires à choix multiples. L'intervention d'un professeur n'est plus nécessaire et le terminal professeur est donc supprimé.

Pour la mise en oeuvre de l'architecture de la figure 2, l'élève doit disposer à la fois d'un terminal élève 50 et d'un dispositif de type télétel 120. Ce dernier est relié à un serveur télématique 130 qui est lui même en liaison avec l'ensemble informatique. Comme précédemment, cet ensemble informatique est relié au centre serveur 70 qui est en communication avec le terminal élève. Le dispositif télétel est utilisé en tant qu'outil de saisie sur lequel l'élève indique ses réponses au questionnaire qu'il aura choisi après avoir accédé au serveur télématique préalablement alimenté en questionnaires par l'ensemble informatique. Les réponses de l'élève sont ensuite transmises à ce serveur télématique qui les adresse à l'ensemble informatique dans lequel elles sont traitées automatiquement par les moyens de traitement de cet ensemble. La note de l'élève peut lui être retournée au travers du serveur télématique mais la correction est envoyée vers le centre serveur qui la réémet vers le terminal élève. Toutes les informations sont véhiculées en mode caractère ce qui en accroît la rapidité de transmission. Compte tenu du particularisme des questionnaires à choix multiples, une simple comparaison avec un corrigé-type effectuée au niveau des moyens de traitement de l'ensemble informatique permet d'attribuer à l'élève une note qui lui sera également retransmise avec son questionnaire corrigé.

Pour la mise en oeuvre de l'architecture de la figure 3, l'élève ne dispose, comme dans la réalisation préférentielle de la figure 1, que d'un terminal élève 50 relié en émission et en réception au centre serveur 70.. Celui-ci complète tout d'abord le questionnaire qui lui aura été remis préalablement par courrier, par exemple, puis l'adresse à l'organisme de formation à partir de son terminal élève. Le document est donc reçu par le centre serveur au niveau duquel il est procédé, grâce aux moyens de gestion 74, à un décryptage des réponses faites par l'élève puis à la réémission vers son terminal 50 d'un document de correction personnalisé.

## Revendications

1. Système électronique d'enseignement à distance entre un premier ensemble de professeurs et un second ensemble d'élèves par l'intermédiaire d'un réseau téléphonique, chacun des professeurs et des élèves étant équipé d'un terminal, chaque terminal élève étant relié à un centre serveur par l'intermédiaire du réseau téléphonique, ce centre serveur étant lui même relié par ce même réseau téléphonique à chaque terminal professeur, caractérisé en ce que le terminal élève (50) comporte des moyens d'émission de télécopie (52, 58, 60) pour adresser au professeur un document à corriger et des moyens de réception en mode télécopie et en mode caractère (52,60) pour recevoir le document corrigé du professeur, le centre serveur (70) comporte des moyens de traitement (74 à 78) pour la réception et la gestion des documents à corriger envoyés par les élèves et pour la réémission des documents corrigés reçus des professeurs, et le terminal professeur (90) comporte des moyens de correction interactive (98) pour permettre une correction directe du document de l'élève au niveau de moyens de visualisation (96) sans nécessiter de moyen d'impression de télécopie.

2. Système électronique d'enseignement à distance selon la revendication 1, caractérisé en ce que les moyens d'émission de télécopie comportent des moyens d'émission/réception élève (52) pour l'envoi sur le réseau téléphonique (30) de données en mode image correspondant à un document saisi sur des moyens d'entrée (58) de ce terminal, et en ce que les moyens d'émission/réception (52) sont reliés à des moyens de mémoire en mode caractère (54) pouvant délivrer le document corrigé à l'élève au travers de moyens de télécopie d'impression (56) reliés à ces moyens mémoire.

3. Système électronique d'enseignement à distance selon la revendication 1, caractérisé en ce que les moyens de traitement comportent des premiers moyens d'émission/réception centrale (76) recevant le document en mode image du terminal élève et le plaçant sélectivement dans une base de données (72) sous le contrôle de moyens de gestion (74), des seconds moyens d'émission/réception centrale (78) permettant une retransmission en mode image des données de la base vers le terminal professeur (90), les premiers moyens d'émission/réception centrale assurant la réémission vers l'élève du document corrigé reçu du terminal professeur sur les seconds moyens d'émission/réception centrale.

4. Système électronique d'enseignement à distance selon la revendication 1, caractérisé en ce que le terminal professeur (90) comporte également des moyens de stockage (100) pour permettre d'emmagasiner, sous la commande de moyen de traitement (94) les documents à corriger reçus sur des moyens d'émission/réception professeur (92).

5. Système électronique d'enseignement à distance selon l'une quelconque des revendications 1 à 4, caractérisé en ce que les moyens de gestion (74) permettent un rangement sélectif, dans la base de données (72), des documents reçus des élèves en fonction de discriminateurs existants préalablement au niveau de ce document.

6. Système électronique d'enseignement à distance selon la revendication 5, caractérisé en ce que les discriminateurs présents dans le document permettent au moins une identification de l'élève, une identification du devoir et une identification de chaque page de ce devoir.

7. Système électronique d'enseignement à distance selon l'une quelconque des revendications 1 à 6, caractérisé en ce qu'il comporte en outre un ensemble informatique (110) relié au centre serveur (70) pouvant recevoir des requêtes de ce dernier et destiné à lui délivrer des corrigés-types des documents adressés au professeur par l'élève.

8. Système électronique d'enseignement à distance selon la revendication 7, caractérisé en ce que les moyens d'émission/réception centrale (76) assurent également un chaînage du corrigé-type avec le document corrigé correspondant devant être réémis vers l'élève.

9. Système électronique d'enseignement à distance selon l'une quelconque des revendications 1 à 8, modifié en ce qu'il ne comporte pas de terminal professeur (90), le centre serveur étant alors dépourvu de seconds moyens d'émission/réception centrale (78).

10. Système électronique d'enseignement à distance selon la revendication 9, caractérisé en ce qu'il comporte en outre un terminal de type télétel (120) permettant la saisie par l'élève de questionnaires à choix multiples et relié à un serveur télétel (130) en liaison avec l'ensemble informatique (110).
